(19) Europäisches Patentamt
European Patent Office
Office européen des brevets

(11) EP 2 156 217 B1

(12) # FASCICULE DE BREVET EUROPEEN

(45) Date de publication et mention de la délivrance du brevet:
**01.01.2014 Bulletin 2014/01**

(21) Numéro de dépôt: **08750271.2**

(22) Date de dépôt: **13.05.2008**

(51) Int Cl.:
***G01S 13/95*** *(2006.01)* ***G01S 13/64*** *(2006.01)*

(86) Numéro de dépôt international:
**PCT/EP2008/055864**

(87) Numéro de publication internationale:
**WO 2008/141983 (27.11.2008 Gazette 2008/48)**

(54) **PROCEDE DE SURVEILLANCE RADAR DES TURBULENCES DE SILLAGE**

VERFAHREN ZUR RADARÜBERWACHUNG VON WIRBELSCHLEPPEN

METHOD FOR RADAR MONITORING OF WAKE TURBULENCE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.05.2007 FR 0703479**

(43) Date de publication de la demande:
**24.02.2010 Bulletin 2010/08**

(73) Titulaire: **THALES**
**92200 Neuilly-sur-Seine (FR)**

(72) Inventeur: **BARBARESCO, Frédéric**
**91230 Montgeron (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 197 763** **FR-A- 2 890 450**
**US-A- 5 208 600** **US-A- 5 729 465**
**US-B1- 6 480 142**

- **GERZ ET AL: "Research towards a wake-vortex advisory system for optimal aircraft spacing" COMPTES RENDUS - PHYSIQUE, ELSEVIER, PARIS, FR, vol. 6, no. 4-5, mai 2005 (2005-05), pages 501-523, XP005048202 ISSN: 1631-0705**
- **MARSHALL R E ET AL: "Wingtip generated wake vortices as radar targets" RADAR CONFERENCE, 1996., PROCEEDINGS OF THE 1996 IEEE NATIONAL ANN ARBOR, MI, USA 13-16 MAY 1996, NEW YORK, NY, USA,IEEE, US, 13 mai 1996 (1996-05-13), pages 184-189, XP010164750 ISBN: 0-7803-3145-1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 156 217 B1

## Description

La présente invention concerne le domaine du contrôle du trafic aérien et de la sécurité aérienne en général. Elle concerne plus particulièrement les règles de sécurité qui régissent les distances relatives entre aéronefs suivant l'un derrière l'autre un même couloir aérien, notamment lors des phases de décollage et lors des phases d'approche et d'atterrissage.

Dans le domaine du contrôle du trafic aérien, les distances de sécurité entre avions, normes dictées par l'OACI (Organisation de l'Aviation Civile Internationale) ont été établies afin d'éviter les dangers liés à la rencontre par les avions des turbulences de sillage (ou "Wake Vortex" selon la dénomination anglo-saxonne) générées par un avion qui les précède. Une telle turbulence est en effet particulièrement dangereuse lorsque l'avion qui la traverse est dans une situation de vulnérabilité, telle que celle qu'il connaît lors des phases de décollage et d'atterrissage, en particulier au niveau de l'entrée dans la zone de guidage par l'ILS (i.e. "Instrument Landing System" selon la dénomination anglo-saxonne) pour l'approche de la piste à l'atterrissage, alors qu'il se trouve à une distance relativement faible du sol et dans des zones de navigation relativement encombrées.

Actuellement, pour des raisons de sécurité, et du fait que l'évolution au cours du temps de ces turbulences est relativement mal connue, les distances séparant deux aéronefs, imposées par l'OACI, correspondent à des marges de sécurité importantes. Ces distances de sécurité ne prennent en particulier pas en compte des conditions météorologiques (turbulence naturelle de l'atmosphère) qui conditionnent la vitesse d'affaiblissement du phénomène, ni les conditions aérologiques (vent de travers par exemple) qui conditionnent son déplacement dans l'espace.

Face à l'augmentation constante et rapide du trafic aérien et à l'arrivée de nouveaux avions gros porteurs (Airbus A380 et Boeing B747-8), un double problème se pose lié aux deux contraintes antagonistes suivantes:

- une première contrainte traduit le fait qu'un avion gros porteur produit des turbulences de sillage plus importantes qu'un avion moyen porteur ou petit porteur. De la sorte, et en l'absence de paramètres complémentaires, la distance de sécurité que doit respecter un avion qui suit un gros porteur doit être, dans l'absolu, naturellement plus importante que dans le cas où le même avion suit un moyen ou un petit porteur; en particulier en phase de décollage et d'atterrissage. Cette contrainte se traduit par un allongement prévisible des temps d'attente lors des décollages et des atterrissages pour les avions se trouvant placés derrière un gros porteur.
- une seconde contrainte traduit le fait que pour écouler un trafic aérien sans cesse plus important, il est nécessaire d'accélérer les rotations pour éviter l'engorgement des terminaux aériens.

Face à ces contraintes antagonistes, une solution consiste à complexifier les infrastructures aéroportuaires pour permettre aux aéronefs de suivre, tant au décollage qu'à l'atterrissage, des trajectoires (couloirs) diversifiées, de sorte que deux avions puissent se suivre de façon relativement proche en empruntant des axes de décollage ou d'atterrissage différents permettant à chaque avion de ne pas traverser le sillage de l'avion qui précède alors que la turbulence de sillage est encore dangereuse. Cependant cette solution, outre le fait qu'elle nécessite la mise en place d'équipements de guidage relativement sophistiqués, dont beaucoup d'aéroports sont dépourvus, ne permet pas non plus de déterminer si la distance de sécurité appliquée à telle ou telle circonstance est une distance juste suffisante ou si elle est au contraire trop largement estimée.

Une autre solution connue consiste à essayer de détecter la présence de turbulences de sillage et la distance de telles turbulences au moyen de senseurs. Différents types de senseurs ont été étudiés pour la détection des turbulences de sillage, et en particulier les Lidar Doppler, systèmes à émission Laser pulsée permettant de faire une mesure Doppler. L'inconvénient majeur de ce type de senseur pour une utilisation opérationnelle, est qu'il ne peut fonctionner correctement que par temps clair. Par brouillard et temps de pluie, le Lidar ne peut plus être employé. De plus le Lidar, bien que possédant une bonne résolution angulaire, meilleure en particulier qu'un Radar, dispose de résolutions distance et doppler plus faibles. En particulier, le Lidar est incapable de mesurer certains détails sur la géométrie de la spirale de turbulence qui permettent en particulier de déterminer son état d'affaiblissement de sorte qu'on obtient une connaissance insuffisante de la turbulence détectée. De plus, les systèmes Lidars actuels ne sont pas en mesure de surveiller, dans un laps de temps compatible des besoins opérationnels, un secteur de l'espace suffisamment large pour permettre une surveillance efficace d'une zone aéroportuaire.

Il est également connu, notamment par le brevet américain US 5.208.600, un capteur de surveillance pour la détection et la surveillance des conditions aérodynamiques dans le voisinage d'une trajectoire de descente d'aéronef utilisant un émetteur radar pour éclairer la trajectoire de descente. Les réflexions radar des tourbillons induits par l'aéronef, les turbulences en air clair et les vents de travers sont reçus par un système de radar monopulse dans lequel un faisceau Doppler somme et un faisceau Doppler différence des échos radar est déterminée. La somme et la différence des faisceaux Doppler sont traitées afin de déterminer les conditions aérodynamiques dans les environs de la descente. Ces conditions aérodynamiques sont évaluées pour déterminer si des conditions aérodynamiques dangereuses existent dans la région de la descente.

Le brevet américain US 6.480.142 enseigne une méthode et un appareil pour mesurer les paramètres des écoulements atmosphérique turbulents utilisant les décalages en fréquence, dus à l'effet Doppler, des échos radar rétrodiffusé par les sons générés par ces écoulements atmosphériques turbulents. Dans ce document, les largeurs de bande Doppler des signaux rétrodiffusés reçus sont utilisés pour estimer la turbulence de l'écoulement atmosphérique et la fréquence moyenne au sein d'une bande passante est traitée pour estimer sa vitesse d'écoulement radial. La vitesse d'écoulement totale et l'angle de la vitesse d'écoulement, par rapport à l'axe de l'antenne, de l'écoulement atmosphérique turbulent peuvent être estimées en estimant la vitesse radiale d'écoulement à deux positions radiales et en traitant ces deux vitesses radiales. Le traitement des données Doppler est déclenché lorsque la puissance totale des signaux à l'intérieur de la bande de fréquence Doppler dépasse un niveau de puissance prédéterminé.

Un but de l'invention est de proposer une méthode permettant, dans le contexte général d'un trafic aéroportuaire, de déterminer pour un avion donné s'il est à une distance suffisante de l'avion qui le précède sur sa route pour ne pas subir les effets de la turbulence de sillage provoqué par l'avion qui précède alors que lui-même se trouve dans une situation vulnérable, en phase de décollage ou d'atterrissage par exemple.

L'enjeu est ici, de pouvoir déterminer en temps réel et par tout temps (temps clair, brouillard, pluie,...) le comportement de ces turbulences de sillage afin de pouvoir en fonction de la configuration des pistes et des conditions météos, régler de façon dynamique la distance de sécurité entre avions, tout en assurant un niveau de sûreté élevé.

A cet effet l'invention a pour objet un procédé pour détecter et qualifier l'état et l'évolution d'une turbulence de sillage provoquée par un aéronef, à partir des signaux radars réfléchis par cette turbulence, ces signaux étant analysés au travers de cellules d'analyse de dimension données en distance et gisement, caractérisé en ce qu'il comporte:

- une première étape principale préliminaire de détection proprement dite pour détecter et de localiser une turbulence dans une cellule,
- une deuxième étape principale pour déterminer la force de la turbulence détectée,
- une troisième étape principale pour déterminer l'âge de la turbulence détectée ainsi que les paramètres géométriques qui la caractérisent;

la deuxième et la troisième étape étant mises en oeuvre en parallèle, indépendamment l'une de l'autre, pour chaque cellule d'analyse pour laquelle une turbulence a été détectée à l'issue de la première étape.

Selon l'invention, la première étape principal comporte elle-même:

- une première étape de décomposition spectrale à haute résolution
- une deuxième étape de calcul de l'entropie S du spectre doppler à haute résolution du signal reçu,
- troisième étape de détection de la présence d'une turbulence pour chaque cellule d'observation, par comparaison à un seuil fixé du niveau de l'entropie S mesuré pour cette cellule;

cette première étape principale fournissant une information sur la position de la turbulence détectée et une information sur la richesse du spectre du signal reçu correspondant.

Selon, l'invention, la deuxième étape principale comporte elle-même:

- une première étape de décomposition spectrale par transformation de Fourrier du signal reçu,
- une deuxième étape de normalisation du spectre doppler obtenu,
- une troisième étape de détection des composantes de niveau significatif du spectre doppler, par comparaison par rapport à un seuil fixé,
- une quatrième étape de calcul de la circulation r de la vitesse tangentielle V(r) à l'intérieur de la turbulence,
- une cinquième étape de calcul de la variance L de la vitesse tangentielle V(r) à partir des composantes significatives du spectre doppler;

cette deuxième étape principale fournissant une information sur la force de la turbulence détectée

Selon l'invention, la troisième étape principale comporte elle-même:

- une première étape de détermination des composantes fréquentielles du spectre doppler à haute résolution du signal reçu par détermination des racines du polynôme caractéristique du modèle autorégressif du signal reçu
- une deuxième étape d'analyse de la densité des composantes du spectre doppler et de la pente de variation de la valeur de ces composantes au cours du temps d'analyse;

cette troisième étape principale fournissant une information sur le stade d'évolution de la turbulence détectée et une information sur la géométrie de celle-ci.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui présentent:

- les figures 1 à 3, des illustrations schématiques du phénomène de turbulence de sillage,
- la figure 4, une illustration de l'évolution au cours du temps d'une telle turbulence,
- la figure 5, Un synoptique de principe du procédé selon l'invention,
- la figure 6 un spectrogramme représentant de manière schématique l'évolution des composantes du spectre doppler du signal correspondant à une turbulence de seuil récemment formée,
- la figure 7, un spectrogramme représentant de manière schématique l'évolution des composantes du spectre doppler du signal correspondant à une turbulence de seuil en cours d'évolution,
- la figure 8, un spectrogramme représentant de manière schématique l'évolution des composantes du spectre doppler du signal correspondant à une turbulence de seuil en voie de disparition.

On considère dans un premier temps les figures 1 à 4 qui illustrent de manière schématique, le phénomène de turbulence de sillage créé par un aéronef 11. Comme l'illustre ces trois figures, la turbulence de sillage se concrétise par la création à l'arrière de l'aéronef de deux enroulements 21 et 22 (vortex) qui provoquent des rotations en sens opposé de la masse d'air. On parle ainsi de rouleaux "contre-rotatifs".

Chaque rouleau 21, 22 se présente comme une spirale dont les points sont situés par rapport au centre à une distance $r(\theta)$ variant de manière exponentielle en fonction du nombre de révolutions effectuées pour joindre le point considéré au centre. On peut ainsi écrire la relation:

$$r(\theta) = a \cdot e^{b\theta} \quad \text{pour } \theta \text{ variant de 0 à } N \cdot \pi \text{ (N entier).} \qquad [1]$$

où a et b représentent les paramètres géométriques de la spirale.

Chaque rouleau est en outre caractérisé par son noyau 31 de rayon $r_c$.

Il est connu d'évaluer le danger lié aux turbulences de sillage provoquées par un aéronef, en déterminant la valeur de certaines caractéristiques physiques.

Ainsi une turbulence est généralement caractérisée par sa taille, au travers de la distance $b_0$ qui sépare les centres des deux rouleaux (vortex) qui la constitue. Cette distance est donnée par la relation suivante:

$$b_0 = s \cdot B \qquad [2]$$

dans laquelle B représente l'envergure de l'avion, comme illustré par la figure 1.
Le facteur s est quant à lui égal à $\pi/4$, de sorte que $b_0$ est sensiblement égale aux ¾ de l'envergure B.

Cette turbulence est également caractérisée, de manière connue, par la vitesse tangentielle de la masse d'air à l'intérieur des deux rouleaux 21 et 22. Cette vitesse suit une loi exponentielle, avec augmentation de la vitesse tangentielle du centre vers la périphérie à l'intérieur du coeur 31 du rouleau au rayon $r_c$ du coeur, et une décroissance en fonction du rayon $r(\theta)$ à l'extérieur du coeur. Elle peut ainsi être définie de manière connue par les relations suivantes:

$$v(r) = \frac{r}{r_c} \cdot V_{max} \quad \text{pour } 0 \le |r| \le r_c \qquad [3]$$

et

$$v(r) = \frac{r_c}{r} \cdot V_{max} \quad \text{pour } r_c \le |r| \qquad [4]$$

$$V_{max} \text{ étant défini par la relation: } V_{max} = \frac{\Gamma}{2 \cdot \pi \cdot r_c} \quad [5]$$

où $\Gamma$ représente la circulation du vecteur V le long de la spirale formant le rouleau.
La vitesse tangentielle à l'intérieur des rouleaux peut ainsi atteindre en moyenne, voire dépasser, +/- 10 m/s.

Cette turbulence est encore caractérisée, de manière connue, par la circulation $\Gamma$ de la vitesse des masses d'air dans la turbulence. La circulation $\Gamma$ qui représente le moment cinétique (en $m^2/s$) de la vitesse tangentielle de la masse d'air (intégrale du produit de la vitesse tangentielle $V_T$ au rouleau par son rayon $r(\theta)$) permet de caractériser la force de la turbulence de sillage. La valeur initiale de la circulation, $\Gamma_0$ est définie, comme une grandeur proportionnelle au poids de l'avion et inversement proportionnel à son envergure et sa vitesse. On peut ainsi écrire:

$$\Gamma_0 = \frac{M \cdot g}{\rho \cdot V \cdot s \cdot B} \quad [6]$$

où M représente la masse de l'aéronef, V sa vitesse et B son envergure.
Les paramètres g, $\rho$ et s représentent quant à eux respectivement l'accélération de pesanteur, un paramètre caractéristique de la géométrie des ailes de l'aéronef et un facteur égal à $\pi/4$.

Il est par ailleurs connu que la turbulence de sillage créée par un aéronef évolue au cours du temps, cette évolution comme l'illustre la figure 4, les deux rouleaux 21 et 22 évoluent au cours du temps. Ils perdent ainsi naturellement de l'altitude (du fait de la contre-rotation) avec une vitesse $V_d$ inversement proportionnelle à l'envergure B de l'aéronef, donnée par la relation suivante:

$$V_d = \frac{\Gamma_0}{2 \cdot \pi \cdot b_0} = \frac{\Gamma_0}{2 \cdot \pi \cdot s \cdot B} \quad [7]$$

On obtient ainsi, pour des avions de taille moyenne une vitesse de descente de l'ordre de 2 m/s en moyenne.

Cette turbulence de sillage peut en outre subir l'influence du vent de sorte que les deux rouleaux, ou vortex, sont également soumis à l'action éventuelle du vent et peuvent être transportés par le vent de travers.

Par ailleurs il est connu que quand une turbulence se situe à proximité du sol, elle est soumise également à d'autres phénomènes plus complexes, tels que des phénomènes de cisaillement de vent qui font tourner chaque rouleau l'un par rapport à l'autre, ou encore des phénomènes de rebond sur le sol faisant apparaître des rouleaux parasites miroirs.

Il est enfin connu que, de façon naturelle, les turbulences de sillage décroissent et meurent en fonction de la turbulence naturelle de l'atmosphère, caractérisée par les grandeurs TKE (ou "Turbulent Kinetic Energy" selon la dénomination anglo-saxonne) et EDR (ou "Eddy Dissipation Rate" selon la dénomination anglo-saxonne), mais également sous l'action de phénomènes d'autodestruction par « onde de Crow » liés à l'enroulement des rouleaux sur eux-mêmes. Cette décroissance et cette mort se traduisent en particulier par une perte progressive de force et une diminution de la vitesse des masses d'air à l'intérieur de la turbulence. Ainsi une turbulence donnée subit une phase de croissance, suivie d'une phase de décroissance et d'extinction.

En ce qui concerne les turbulences de sillage, des enquêtes, menées auprès de pilotes d'aéronefs, ont montré que les zones les plus dangereuses lors de l'approche sur un aéroport sont au nombre de deux. La première zone correspond à la zone d'interception ILS (point d'entrée du cône d'approche défini par l'ILS situé de 700 m à 1000 m au dessus du sol). Dans cette zone, en effet, des avions venant de différentes directions s'alignent sur l'axe de descente défini par l'ILS en générant en ce point des turbulences de sillage qu'un aéronef entrant dans le cône d'approche va devoir traverser. La seconde zone correspond à l'approche finale au sol à cause des phénomènes de rebond décrits précédemment. Pour ces deux zones, dans lesquelles les aéronefs évoluent de manière proche les uns des autres à des altitudes faibles, voire très faible, il est donc nécessaire que chaque aéronef puisse non seulement détecter la présence d'une turbulence devant lui, mais aussi que cet aéronef puisse estimer la force de la perturbation générée par la turbulence détectée.

On s'intéresse à présent à la figure 5 qui présente l'organigramme de principe du procédé de détection et de caractérisation d'une turbulence de sillage.

Le procédé selon l'invention, réalise à cet effet trois étapes principales distinctes:

- une première étape principale préliminaire 51 de détection proprement dite qui permet de détecter et de localiser une turbulence,
- une deuxième étape principale 52 qui permet de déterminer la force de la turbulence détectée,
- une troisième étape principale 53 qui permet de déterminer à la fois l'âge de la turbulence détectée ainsi que les paramètres géométriques qui la caractérise.

Les données 54 traitées par le procédé selon l'invention sont constituées par les échantillons de signal radar reçu. Chaque échantillon de signal correspond ici de manière connue au signal provenant d'une cellule de l'espace déterminé par sa distance radiale et son gisement et sa taille en distance et gisement, taille qui définit de manière connue la résolution du signal reçu. Chaque échantillon de signal est défini en amplitude et en phase par une composante réelle I et une composante imaginaire Q.

A partir de ces données d'entrée, le procédé selon l'invention délivre les informations suivantes:

- la position 55 de la turbulence détectée,
- une information 56 sur la richesse spectrale du signal correspondant,
- des informations 57 relatives à la force de la turbulence détectée,
- une information 58 sur l'âge de la turbulence détectée,
- la valeur 59 des paramètres géométriques caractérisant la turbulence.

Selon l'invention la tâche 51 de détection est réalisée en plusieurs étapes:

- une première étape 511 d'analyse doppler à haute résolution du signal reçu,
- une seconde étape 512 de calcul de l'entropie du spectre doppler déterminé à l'étape précédente,
- une troisième étape 513 de détection proprement dite.

L'étape 511 d'analyse doppler à haute résolution est réalisée en mettant en oeuvre une méthode d'analyse par filtrage auto-régressif permettant de déterminer pour chaque cellule (distance, azimut) un modèle spectral du signal reçu par ses coefficients de réflexion $\mu_n$ à partir de séquences restreintes d'échantillon de signal. Pour calculer les coefficients $\mu_n$ Il est possible d'utiliser toute méthode connue telle que l'algorithme en treillis de Burg par exemple. Cependant, dans une forme préférée de mise en oeuvre du procédé selon l'invention, la méthode mise en oeuvre pour déterminer l'ordre du modèle et les coefficients $\mu_n$ est la méthode d'analyse doppler par filtrage "autorégressif régularisé" décrite dans les demandes de brevets français déposées par la demanderesse le 13/06/1995 sous le numéro 95 06983, et le 06/09/2005 sous le numéro 05 09095, méthode qui permet d'estimer de manière satisfaisante les coefficients $\mu_n$ du modèle autorégressif à partir d'une suite restreinte d'échantillon de signal. Cette méthode, non détaillée ici, consiste en particulier à associer un filtrage autorégressif en treillis par blocs mettant en oeuvre l'algorithme de Burg ou encore un algorithme de type "MUSIC" (**Mu**ltiple **S**ignal **C**lassification) à une méthode dite de régularisation consistant à appliquer à chaque coefficient $\mu_n$ obtenu un coefficient permettant avantageusement de limiter les conséquences des instabilités numériques engendrées par le filtrage autorégressif lorsque le nombre d'échantillons disponible est faible. Les coefficients $\mu_n$ obtenus sont alors dits "régularisés".

L'étape 511 est suivie par une étape 512 durant laquelle les coefficients $\mu_n$ sont utilisés pour calculer L'entropie S du spectre doppler obtenu. Cette entropie qui caractérise la richesse du spectre en composantes spectrales a pour expression:

$$S = \sum_{k=2}^{N-1} (n-k) \cdot \left( \frac{1}{2} \cdot \ln\left( \frac{1+|\mu_k|}{1-|\mu_k|} \right) \right)^2 \qquad [8]$$

où N représentent le nombre de coefficients $\mu_n$ du modèle défini à l'étape 511.

Par suite, au cours de l'étape 513, l'entropie S calculée pour chacune des cellules (distance, azimut) est comparée à un seuil $S_1$, fixé en fonction de critères de probabilité de détection et de probabilité de fausse alarme. De la sorte, chaque cellule présentant une entropie S supérieure au seuil $S_1$ est détectée et considérée comme une zone où la masse d'air présente une perturbation liée à une turbulence de sillage. A l'issue de l'étape 513 de la tâche 51 on dispose ainsi d'une cartographie des cellules (distance, azimut) dans lesquelles une turbulence a pu être détectée.

Selon l'invention la tâche 52 a pour objet de caractériser la force des turbulences détectées. Elle ne s'applique donc que sur les cellules pour lesquelles la tache 51 a produit une détection. Comme la tâche 51 elle est également réalisée en plusieurs étapes:

- une première étape 521 durant laquelle on effectue une analyse spectrale classique du spectre du signal reçu,
- une deuxième étape 522 de normalisation du niveau des composantes spectrales,
- une troisième étape 523 de détection des composantes spectrales significatives,
- une quatrième étape 524, durant laquelle on calcule la circulation $\Gamma$ de la vitesse tangentielle caractérisant la turbulence,
- une cinquième étape 525, durant laquelle on calcule la variance L de cette même vitesse tangentielle.

La première étape 521 est réalisée en appliquant la méthode d'analyse spectrale classique, par transformation de Fourier par exemple. Cette analyse spectrale permet de déterminer les composantes du spectre doppler qui caractérise la turbulence. Elle est suivie par l'étape 522 qui a pour objet de normaliser le spectre doppler obtenu par rapport à un niveau ambiant de signal dans le plan des fréquences. Cette normalisation du spectre du signal sur l'axe fréquentiel peut par exemple être réalisée pour chaque fréquence à partir de la valeur moyenne et la variance du niveau du spectre au voisinage de la fréquence considérée, par des procédés connus de type TFAC (i.e. "Taux de Fausse Alarme Constant").

L'étape de normalisation 522 est suivi d'une étape 523 de détection des composantes spectrales significatives, c'est à dire des composantes spectrales qui caractérisent la turbulence. Comme lors de l'étape 513, la détection est ici réalisée en comparant le niveau normalisé de chaque composante spectrale à un seuil $S_2$. Chaque composante dont le niveau dépasse le seuil, est ici retenue pour caractériser la turbulence.

Les composantes spectrales significatives ayant été déterminées, l'étape 524 procède au calcul de la circulation $\Gamma$ de la vitesse tangentielle des masses d'air dans la cellule considérée. Celle-ci est définie de manière connue (à un facteur arbitraire près) par la relation de proportionnalité suivante:

$$\Gamma \propto \frac{2 \cdot \int_{V_{min}}^{V_{max}} V_i^2 \cdot [F(V_i)]^{2/3} \cdot dV_i}{\int_{V_{min}}^{V_{max}} [F(V_i)] \cdot dV_i} \qquad [9]$$

où $F(V_i)$ représente la valeur de la composante de vitesse $V_i$ (de fréquence $f_i$) considérée du spectre doppler du signal reçu.

Cette circulation représente, comme il a été dit précédemment, le moment cinétique (en $m^2/s$) de la vitesse tangentielle des masses d'air à l'intérieur de la turbulence, c'est à dire l'intégrale du produit de la vitesse tangentielle $V_T$ au mouvement de la masse d'air en un point du vortex considéré par la distance $r(\theta)$ de ce point au centre du vortex. Elle permet avantageusement de caractériser la force globale de la turbulence de sillage détectée dans la cellule (distance, azimut) considérée.

Parallèlement à l'étape 524, l'étape 525 procède quant à elle, à partir des composantes spectrales significatives, au calcul de la variance réduite L de la vitesse tangentielle des masses d'air dans la cellule considérée. Celle-ci est définie de manière connue (à un facteur arbitraire près) par la relation de proportionnalité suivante:

$$L \propto \frac{\int_{V_{min}}^{V_{max}} V_i^2 \cdot [F(V_i)] \cdot dV_i}{\int_{V_{min}}^{V_{max}} [F(V_i)] \cdot dV_i} \qquad [10]$$

Comme la circulation $\Gamma$, la variance L permet avantageusement de caractériser la force globale de la turbulence de sillage détectée dans la cellule (distance, azimut) considérée. Elle caractérise en effet la dispersion de la perturbation des masses d'air crée par la turbulence et donc le caractère plus ou moins agité de ces masses d'air.

A l'issue des étapes 524 et 525 de la tâche 52, on obtient pour chaque cellule dans laquelle une turbulence a été détectée, cellule dont la tache 51 fournit la position, deux informations L et $\Gamma$, permettant de caractériser la force de la turbulence détectée.

Selon l'invention, la tâche 53, a quant à elle pour double objet de permettre la détermination de certains paramètres géométriques relatifs à la turbulence détectée, ainsi que de permettre de déterminer l'âge de la turbulence ou plus exactement son degré d'évolution. A cet effet, elle comporte les étapes suivantes:

- une première étape 531 qui procède, pour chacune des cellules (distance, gisement), à la détermination des composantes du spectre doppler du signal reçu,
- une deuxième étape 532 qui procède, seulement pour les cellules dans lesquelles une turbulence a été détectée, à l'analyse des variations au cours du temps des fréquences des composantes spectrales du signal.

La première étape 531, est réalisée à partir du modèle autorégressif déterminé au cours de l'étape 511 d'analyse doppler à haute résolution. Elle consiste principalement à déterminer les fréquences propres du modèle en calculant les racines du polynôme caractérisant le modèle. On obtient ainsi avantageusement une décomposition spectrale fine du signal reçu.

La seconde étape 532, consiste quant à elle à analyser l'évolution du spectre doppler sur un intervalle de temps d'analyse $\Delta$t durant lequel les moyens de détection radar sont dirigés sur la cellule (distance, azimut) considérée. Selon l'invention pour chaque cellule dans laquelle une turbulence a été détectée, on estime la pente de variation, au cours du temps, de la fréquence de chacune des composantes du spectre doppler. Cette analyse permet avantageusement comme l'illustrent les figures 6 à 8 de déterminer le stade d'évolution de la turbulence détectée.

La figure 6 présente de manière schématique dans le plan (temps, vitesse doppler), pour une cellule (distance, azimut) donnée, l'évolution au cours du temps de la fréquence des composantes spectrales du signal correspondant à une turbulence récemment formée. Il est à noter que dans la représentation de la figure 6, comme dans celles des figures 7 et 8, les fréquences doppler sont représentées par les vitesses correspondantes exprimées en m/s.
Comme on peut le constater sur la figure, la turbulence est caractérisée par un spectre dont les composantes exprimées dans l'espace des vitesses doppler (i. e. comprises entre O m/s et $\pm V_{max}$) sont nombreuses et resserrées. En outre ces composantes présentent toutes des pentes d'évolution 61 de signe positif, la valeur de chacune des composantes croissant au cours du temps. A ce stade d'évolution, la turbulence voit donc sa vitesse tangentielle croître et avec elle sa force. Il convient donc de signaler à tout aéronef approchant la zone correspondant à la cellule considérée que cette zone est fortement perturbée et que la perturbation n'a pas atteint son maximum.

La figure 7 présente de la même façon l'évolution au cours du temps de la fréquence des composantes spectrales du signal correspondant à une turbulence pouvant être qualifiée de mature. Une telle turbulence est caractérisée par un spectre dont les composantes sont moins nombreuses et plus espacées. En outre pour certaines de ces composantes 71 la fréquence doppler (et donc la vitesse) est croissante au cours du temps, tandis que pour certaines autres 72 la fréquence doppler (et donc la vitesse) décroît au cours du temps. Certaines composantes spectrales présentent ainsi des pentes d'évolution 73 de signe positif et d'autres des pentes d'évolution 74 de signe négatif. Une telle turbulence voit donc sa vitesse tangentielle décroître par rapport au stade d'évolution précédent, décroissance qui trouve sa traduction dans l'affaiblissement de la perturbation engendrée par la turbulence et par suite du danger que celle-ci peut représenter pour un aéronef entrant dans la cellule (distance, gisement) occupée par la perturbation considérée.

La figure 8 présente de la même façon, l'évolution au cours du temps de la fréquence des composantes spectrales du signal correspondant à une turbulence en voie d'extinction. Comme on peut le constater sur la figure, la turbulence est caractérisée par un spectre dont les composantes 81 sont peu nombreuses et étalée en fréquence. En outre ces composantes présentent toutes des pentes d'évolution 82 de signe négatif, la fréquence doppler (et donc la vitesse) de chacune des composantes décroissant au cours du temps. A ce stade d'évolution, la turbulence voit donc sa vitesse tangentielle décroître et avec elle sa force. Une telle turbulence en voie d'extinction, ne produit plus, bien qu'étant toujours détectable, qu'une perturbation d'intensité modérée des masses d'air dans la cellule considérée. Suivant la taille de l'aéronef susceptible de la traverser, elle ne représente donc plus, sinon aucune menace, du moins qu'une menace modérée.

L'estimation des pentes de variation des vitesses au cours du temps peut être réalisée par différentes méthodes connues graphiques semi-graphiques ou encore algébriques, à partir des valeurs de fréquences propres fournies par l'étape 531. Ces méthodes connues par ailleurs ne sont pas décrites ici. Le temps d'observation $\Delta$t est quant à lui déterminé en fonction de l'équipement de détection radar utilisé et en particulier, dans les cas d'un radar à balayage, par l'intervalle de temps séparant deux périodes de passage du faisceau radar dans la même direction d'observation et donc sur la même cellule (distance, gisement).

Outre la détermination du stade d'évolution de la turbulence détectée, la détermination des pentes d'évolution des fréquences doppler permet également, avantageusement, de déterminer certains paramètres liés à la géométrie de la turbulence, en particulier le facteur b de la relation [1] définissant r($\theta$) et caractérisant l'ouverture de la spirale constituant un rouleau (vortex) 21.
En effet, si l'on considère les relations [3] et [5], on peut écrire:

$$v(r) = \alpha \cdot r \qquad [11]$$

avec

$$\alpha = \frac{V_{max}}{r_c} = \frac{\Gamma_0}{2 \cdot \pi \cdot r_c^2} \qquad [12]$$

De même l'augmentation $\delta r$ du rayon $r(\theta)$ correspondant à une révolution complète ($\Delta\theta = 2\pi$) sur la spirale autour de son centre peut être défini par la relation suivante:

$$r = ae^{b\theta} \Rightarrow r + \delta r = ae^{b(\theta+2\pi)} = r.e^{b2\pi} \Rightarrow \frac{r+\delta r}{r} = e^{b2\pi} \qquad [13]$$

$$\frac{\delta r}{r} = e^{b2\pi} - 1 \qquad [14]$$

De la sorte, en considérant les relations [12] et [14], on peut finalement écrire:

$$V(r) = \alpha.r \Rightarrow \frac{\delta V(r)}{V(r)} = \frac{\delta r}{r} = e^{b2\pi} - 1 \Rightarrow b = \frac{1}{2\pi}\log\left(1 + \frac{\delta V(r)}{V(r)}\right) \qquad [15]$$

Par suite, connaissant l'évolution de V(r), il est avantageusement possible d'estimer le paramètre b définissant les rouleaux (vortex) 21 et 22. Pour cela, en pratique, on considère, l'évolution du spectre doppler au cours du temps telle que représentée sur les spectrogrammes des figures 6 à 8, et on détermine, en considérant les pentes de variation de deux composantes spectrales 83 et 84, la variation $\delta V(r)$ de la vitesse en fonction du rayon. Cette variation est ensuite normalisée par la vitesse $V_m(r)$ moyenne définie par les deux composantes spectrales choisies et illustrée par la droite pointillée 85.

Comme on peut ainsi le constater au travers de la description qui précède, le procédé selon l'invention propose, au delà de ce que proposent les procédés de l'art antérieur connu, une méthode pour déterminer, non seulement la présence d'une turbulence de sillage dans une zone donnée de l'espace, mais également la force de cette turbulence, c'est à dire l'impact négatif qu'elle pourrait avoir sur les conditions de vol d'un aéronef devant traverser la zone de l'espace considérée.

Cette caractérisation de la turbulence est en outre avantageusement complétée par la caractérisation du stade d'évolution de la turbulence (turbulence jeune, mature, ou en voie d'extinction). Cette information sur le stade d'évolution permet de déterminer en particulier le temps pendant lequel la turbulence détectée est susceptible de représenter une menace.

Cette caractérisation est encore avantageusement complétée par la détermination des paramètres relatifs à la géométrie de la turbulence, le paramètre b en particulier.

L'association de ces informations fournie par le procédé selon l'invention, permet avantageusement, lorsqu'une turbulence de sillage provoquée par le passage d'un aéronef est détectée, de déterminer de manière optimale, en tenant compte en particulier de l'aérologie de la zone (présence de vent de travers), la distance de sécurité la mieux adaptée que doivent respecter, pour leur propre sécurité, les aéronefs situés dans le sillage de l'aéronef à l'origine de la turbulence.

On peut ainsi substituer cette distance de sécurité optimale, justement estimée et déterminée sans hypothèse préalable sur l'aéronef ayant provoqué la turbulence, à une distance de sécurité déterminée a priori simplement en fonction du gabarit de cet aéronef.

Il est à noter que dans la description qui précède, le procédé selon l'invention est décrit dans sa forme la plus complète, celle comportant une première étape 51 de détection, puis deux étapes indépendantes 52 et 53 de caractérisation de la turbulence détectée. Cependant, Il est bien entendu possible de considérer le procédé selon l'invention dans des formes plus simples. Ainsi, les étapes 52 et 53 étant indépendantes l'une de l'autre, on peut par exemple envisager de mettre en oeuvre, sans sortir du champ couvert par le brevet, simplement les étapes de détection 51 et d'estimation 52 de la force de la turbulence détectée; ou encore simplement les étapes de détection 51 et de détermination 53 de l'âge et des paramètres géométriques de la turbulence détectée.

## Revendications

**1.** Procédé pour caractériser l'état et l'évolution d'une turbulence de sillage provoquée par un aéronef, à partir des signaux radars réfléchis par cette turbulence, ces signaux étant analysés au travers de cellules d'analyse de dimension données en distance et gisement, **caractérisé en ce qu'**il comporte:

- une première étape préliminaire (51) de détection, durant laquelle, pour chaque cellule, on cherche à détecter la présence d'une turbulence, l'opération de détection étant réalisée par analyse doppler à haute résolution du signal correspondant à chaque cellule d'analyse ;
- une deuxième étape principale (52) durant laquelle on détermine la force de la turbulence détectée par calcul de la circulation L et de la variance $\Gamma$ de la vitesse tangentielle des masses d'air, à l'intérieur de la turbulence, les deux informations L et $\Gamma$ étant déterminées après décomposition spectrale du signal reçu ;
- une troisième étape principale (53) durant laquelle on analyse l'évolution du spectre doppler à haute résolution du signal reçu, obtenu lors de la première étape (51), pour déterminer l'âge de la turbulence détectée ainsi que la forme et l'étendue de cette turbulence ;

la deuxième et la troisième étape principale étant mises en oeuvre en parallèle, indépendamment l'une de l'autre, pour chaque cellule d'analyse pour laquelle une turbulence a été détectée à l'issue de la première étape (51).

**2.** Procédé selon la revendication 1, **caractérisé en ce que** la première étape principale (51) comporte elle-même:

- une première étape (511) de décomposition spectrale à haute résolution ;
- une deuxième étape (512) de calcul de l'entropie S du spectre doppler à haute résolution du signal reçu ;
- troisième étape (513) de détection de la présence d'une turbulence pour chaque cellule d'observation, par comparaison à un seuil fixé du niveau de l'entropie S mesuré pour cette cellule;

cette première étape principale fournissant une information (55) sur la position de la turbulence détectée et une information (56) sur la richesse du spectre du signal reçu correspondant.

**3.** Procédé selon la revendication 2, **caractérisé en ce que** l'étape (511) de décomposition spectrale à haute résolution met en oeuvre une méthode d'analyse autorégressive régularisée fournissant les coefficients de réflexion $\mu_n$ du modèle autorégressif déterminé.

**4.** Procédé selon la revendication 3, **caractérisé en ce que**, lors de la seconde étape (512), l'entropie S est calculée à partir de la relation suivante:

$$S = \sum_{k=2}^{n-1} (n_k) \cdot \left( \frac{1}{2} \cdot \ln\left( \frac{1+|\mu_k|}{1-|\mu_k|} \right) \right)^2$$

où les termes $\mu_k$ représentent les coefficients de réflexion régularisés du modèle autorégressif du signal reçu.

**5.** Procédé selon l'une des revendications 1 à 4, **caractérisé en ce que** la deuxième étape principale (52) comporte elle-même:

- une première étape (521) de décomposition spectrale par transformation de Fourrier du signal reçu,
- une deuxième étape (522) de normalisation du spectre doppler obtenu,
- une troisième étape (523) de détection des composantes de niveau significatif du spectre doppler, par comparaison par rapport à un seuil fixé,
- une quatrième étape (524) de calcul de la circulation r de la vitesse tangentielle V(r) à l'intérieur de la turbulence,
- une cinquième étape (525) de calcul de la variance L de la vitesse tangentielle V(r) à partir des composantes significatives du spectre doppler;

cette deuxième étape principale fournissant une information (57) sur la force de la turbulence détectée

6. Procédé selon la revendication 5, **caractérisée en ce que**, lors de la quatrième étape (524), la circulation de la vitesse tangentielle V(r) est déterminée à partir des composantes significatives du spectre doppler par la relation suivante:

$$\Gamma \propto \frac{2 \cdot \int_{V_{min}}^{V_{max}} V_i^2 \cdot [F(V_i)]^{2/3} \cdot dV_i}{\int_{V_{min}}^{V_{max}} [F(V_i)] \cdot dV_i}$$

où $F(V_i)$ représente la valeur de la composante $V_i$ du spectre doppler, composante exprimée en m/s.

7. Procédé selon la revendication 5, **caractérisée en ce que**, lors de la cinquième étape (525), la variance L de la vitesse tangentielle est déterminée à partir des composantes significatives du spectre doppler par les relations suivantes:

$$L \propto \frac{\int_{V_{min}}^{V_{max}} V_i^2 \cdot [F(V_i)] \cdot dV_i}{\int_{V_{min}}^{V_{max}} [F(V_i)] \cdot dV_i}$$

où $F(V_i)$ représente la valeur de la composante $V_i$ du spectre doppler, composante exprimée en m/s.

8. Procédé selon l'une quelconque des revendications 1 à 7, **caractérisé en ce que** la troisième étape principale (53) comporte elle-même:

- une première étape (531) de détermination des composantes fréquentielles du spectre doppler à haute résolution du signal reçu par détermination des racines du polynôme caractéristique du modèle autorégressif du signal reçu
- une deuxième étape (532) d'analyse de la densité des composantes du spectre doppler et de la pente de variation de la valeur de ces composantes au cours du temps d'analyse;

cette troisième étape principale fournissant une information (58) sur le stade d'évolution de la turbulence détectée et une information (59) sur la géométrie de celle-ci.

**Patentansprüche**

1. Verfahren zum Charakterisieren des Zustands und der Entwicklung von durch ein Luftfahrzeug verursachten Wirbelschleppen auf der Basis von durch die Wirbel reflektierten Radarsignalen, wobei die Signale durch Analysezellen einer gegebenen Größe im Hinblick auf Distanz und Kurs analysiert werden, **dadurch gekennzeichnet, dass** es Folgendes beinhaltet:

- einen ersten vorläufigen Erkennungsschritt (51), bei dem für jede Zelle die Erkennung der Anwesenheit der Wirbel erfolgt, wobei der Erkennungsvorgang mittels einer Hochauflösungs-Doppler-Analyse des jeder Analysezelle entsprechenden Signals durchgeführt wird;
- einen zweiten Hauptschritt (52), bei dem die Stärke der erkannten Wirbel durch Berechnen der Zirkulation L und der Varianz $\Gamma$ der Tangentialgeschwindigkeit der Luftmassen innerhalb der Wirbel ermittelt wird, wobei die beiden Informationen L und $\Gamma$ nach einer Spektralzerlegung des empfangenen Signals ermittelt werden;
- einen dritten Hauptschritt (53), bei dem die Entwicklung des Hochauflösungs-Doppler-Spektrums des empfangenen Signals, erhalten im ersten Schritt (51), analysiert wird, um das Alter der erkannten Wirbel sowie Form und Ausmaß der Wirbel zu ermitteln;

wobei der zweite und der dritte Hauptschritt parallel, unabhängig voneinander, für jede Analysezelle ausgeführt werden, in der Wirbel nach Abschluss des ersten Schrittes (51) erkannt wurden.

2. Verfahren nach Anspruch 1, **dadurch gekennzeichnet, dass** der erste Hauptschritt (51) selbst Folgendes beinhaltet:

- einen ersten Schritt (511) zur hochauflösenden Spektralzerlegung;
- einen zweiten Schritt (512) des Berechnens der Entropie S des Hochauflösungs-Doppler-Spektrums des empfangenen Signals;
- einen dritten Schritt (513) des Erkennens der Anwesenheit von Wirbeln für jede Beobachtungszelle durch Vergleichen mit einer festen Schwelle des Niveaus der für diese Zelle gemessenen Entropie S;

wobei der erste Hauptschritt eine Information (55) über die Position der erkannten Wirbel sowie eine Information (56) über den Gehalt des Spektrums des entsprechenden empfangenen Signals liefert.

3. Verfahren nach Anspruch 2, **dadurch gekennzeichnet, dass** der Schritt (511) der hochauflösenden Spektralzerlegung eine gesteuerte autoregressive Analysemethode implementiert, die die Reflexionskoeffizienten $\mu_n$ des ermittelten autoregressiven Modells liefert.

4. Verfahren nach Anspruch 3, **dadurch gekennzeichnet, dass** die Entropie S im zweiten Schritt (512) auf der Basis der folgenden Beziehung berechnet wird:

$$S = \sum_{k=2}^{n-1} (n_k) \cdot \left( \frac{1}{2} \cdot \ln\left( \frac{1+|\mu_k|}{1-|\mu_k|} \right) \right)^2$$

wobei die Terme $\mu_k$ die geregelten Reflexionskoeffizienten des autoregressiven Modells des empfangenen Signals repräsentieren.

5. Verfahren nach einem der Ansprüche 1 bis 4, **dadurch gekennzeichnet, dass** der zweite Hauptschritt (52) wiederum Folgendes beinhaltet:

- einen ersten Schritt (521) der Spektralzerlegung durch Fourier-Transformation des empfangenen Signals;
- einen zweiten Schritt (522) des Normalisierens des erhaltenen Doppler-Spektrums;
- einen dritten Schritt (523) des Erkennens von Doppler-Spektrumkomponenten mit signifikantem Pegel durch Vergleichen mit einer festen Schwelle;
- einen vierten Schritt (524) des Berechnens der Zirkulation $\Gamma$ der Tangentialgeschwindigkeit V(r) im Innern der Wirbel;
- einen fünften Schritt (525) des Berechnens der Varianz L der Tangentialgeschwindigkeit V(r) auf der Basis von signifikanten Komponenten des Doppler-Spektrums;

wobei sich der eine Information (57) liefernde zweite Hauptschritt auf die Stärke der erkannten Wirbel bezieht.

6. Verfahren nach Anspruch 5, **dadurch gekennzeichnet, dass** die Zirkulation der Tangentialgeschwindigkeit V(r) im vierten Schritt (524) auf der Basis der signifikanten Komponenten des Doppler-Spektrums durch die folgende Beziehung ermittelt wird:

$$\Gamma \propto \frac{2 \cdot \int_{V_{min}}^{V_{max}} V_i^2 \cdot [F(V_i)]^{2/3} \cdot dV_i}{\int_{V_{min}}^{V_{max}} [F(V_i)] \cdot dV_i}$$

wobei $F(V_i)$ den Wert der Komponente $V_i$ des Doppler-Spektrums repräsentiert, wobei die Komponente in m/s ausgedrückt wird.

**7.** Verfahren nach Anspurch 5, **dadurch gekennzeichnet, dass** die Varianz L der Tangentialgeschwindigkeit im fünften Schritt (525) auf der Basis der signifikanten Komponenten des Doppler-Spektrums durch die folgenden Beziehungen ermittelt wird:

$$L \propto \frac{\int_{V_{min}}^{V_{max}} V_i^2 \cdot [F(V_i)] \cdot dV_i}{\int_{V_{min}}^{V_{max}} [F(V_i)] \cdot dV_i}$$

wobei $F(V_i)$ den Wert der Komponente $V_i$ des Doppler-Spektrums repräsentiert, wobei die Komponente in m/s ausgedrückt wird.

**8.** Verfahren nach einem der Ansprüche 1 bis 7, **dadurch gekennzeichnet, dass** der dritte Hauptschritt (53) wiederum Folgendes beinhaltet:

- einen ersten Schritt (531) des Ermittelns von Frequenzkomponenten des Hochauflösungs-Doppler-Spektrums des empfangenen Signals durch Ermitteln der Wurzeln des charakteristischen Polynoms des autoregressiven Modells des empfangenen Signals;
- einen zweiten Schritt (532) des Analysierens der Dichte der Komponenten des Doppler-Spektrums und des Variationsgefälles des Wertes dieser Komponenten während der Analysezeit;

wobei sich der eine Information (58) liefernde dritte Hauptschritt auf die Entwicklungsstufe der erkannten Wirbel und eine Information (59) über die Geometrie der Wirbel bezieht.

## Claims

**1.** A method for characterising the state and the evolution of wake turbulence caused by an aircraft on the basis of radar signals reflected by said turbulence, said signals being analysed through analysis cells of a given size in terms of distance and bearing, **characterised in that** it comprises:

- a first preliminary detection step (51) during which, for each cell, the detection of the presence of turbulence is carried out, with the detection operation being carried out by high resolution Doppler analysis of the signal corresponding to each analysis cell;
- a second main step (52) during which the strength of the detected turbulence is determined by calculating the circulation L and the variance $\Gamma$ of the tangential velocity of the air masses, inside the turbulence, with the two items of information L and $\Gamma$ being determined after spectral decomposition of the received signal;
- a third main step (53) during which the evolution of the high resolution Doppler spectrum of the received signal, obtained during the first step (51), is analysed so as to determine the age of the detected turbulence, as well as the shape and the extent of said turbulence;

with the second and the third main step being implemented in parallel, independently of each other, for each analysis cell in which turbulence has been detected on completion of the first step (51).

**2.** The method according to claim 1, **characterised in that** said first main step (51) in turn comprises:

- a first step (511) of high resolution spectral decomposition;
- a second step (512) of calculating the entropy S of the high resolution Doppler spectrum of the received signal;
- a third step (513) of detecting the presence of turbulence for each observation cell by comparison with a fixed threshold of the level of the entropy S measured for said cell;

said first main step supplying information (55) relating to the position of the detected turbulence and information (56) relating to the richness of the spectrum of the corresponding received signal.

**3.** The method according to claim 2, **characterised in that** said step (511) of high resolution spectral decomposition implements a controlled auto-regressive analysis method supplying the reflection coefficients $\mu_n$ of the determined auto-regressive model.

**4.** The method according to claim 3, **characterised in that**, during said second step (512), the entropy S is calculated on the basis of the following relationship:

$$S = \sum_{k=2}^{n-1} (n_k) \cdot \left( \frac{1}{2} \cdot \ln\left( \frac{1+|\mu_k|}{1-|\mu_k|} \right) \right)^2$$

where the terms $\mu_k$ represent the controlled reflection coefficients of the auto-regressive model of the received signal.

**5.** The method according to any one of claims 1 to 4, **characterised in that** said second main step (52) in turn comprises:

- a first step (521) of spectral decomposition by Fourier transformation of the received signal;
- a second step (522) of normalising the obtained Doppler spectrum;
- a third step (523) of detecting the components of significant level of the Doppler spectrum by comparison with a fixed threshold;
- a fourth step (524) of calculating the circulation $\Gamma$ of the tangential velocity V(r) inside the turbulence;
- a fifth step (525) of calculating the variance L of the tangential velocity V(r) on the basis of significant components of the Doppler spectrum;

said second main step providing information (57) relating to the strength of the detected turbulence.

**6.** The method according to claim 5, **characterised in that**, during said fourth step (524), the circulation of the tangential velocity V(r) is determined on the basis of the significant components of the Doppler spectrum by the following relationship:

$$\Gamma \propto \frac{2 \cdot \int_{V_{min}}^{V_{max}} V_i^2 \cdot [F(V_i)]^{2/3} \cdot dV_i}{\int_{V_{min}}^{V_{max}} [F(V_i)] \cdot dV_i}$$

where $F(V_i)$ represents the value of the component $V_i$ of the Doppler spectrum, which component is expressed in m/s.

**7.** The method according to claim 5, **characterised in that**, during said fifth step (525), the variance L of the tangential velocity is determined on the basis of the significant components of the Doppler spectrum by the following relationships:

$$L \propto \frac{\int_{V_{min}}^{V_{max}} V_i^2 \cdot [F(V_i)] \cdot dV_i}{\int_{V_{min}}^{V_{max}} [F(V_i)] \cdot dV_i}$$

where $F(V_i)$ represents the value of the component $V_i$ of the Doppler spectrum, which component is expressed in m/s.

**8.** The method according to any one of claims 1 to 7, **characterised in that** said third main step (53) in turn comprises:

- a first step (531) of determining frequency components of the high resolution Doppler spectrum of the received signal by determining roots of the characteristic polynomial of the auto-regressive model of the received signal;
- a second step (532) of analysing the density of the components of the Doppler spectrum and the slope of variation of the value of these components during the analysis time;

said third main step supplying information (58) relating to the stage of evolution of the detected turbulence and information (59) relating to the geometry of said turbulence.

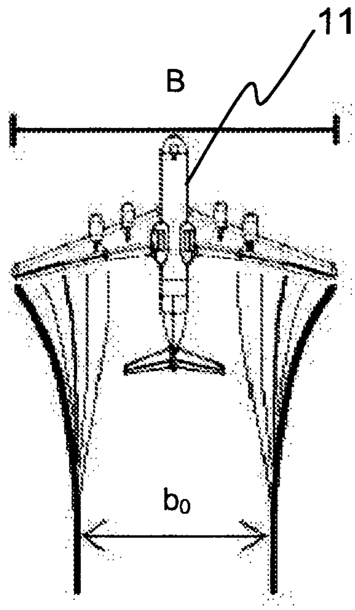


FIG. 1

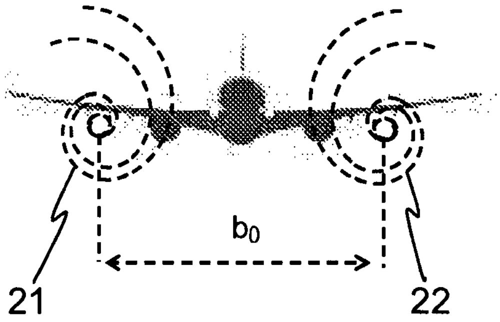


FIG. 2

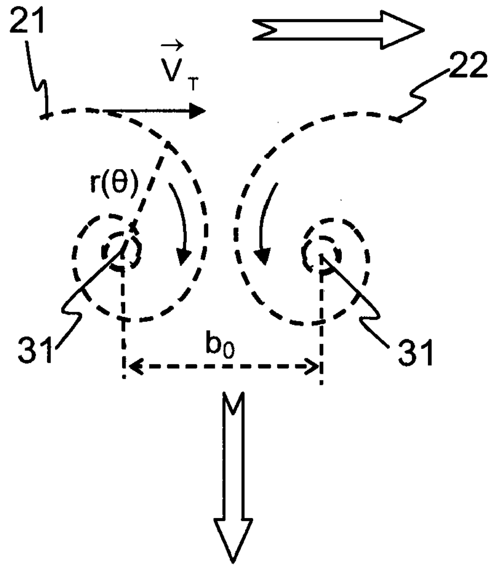


FIG. 3

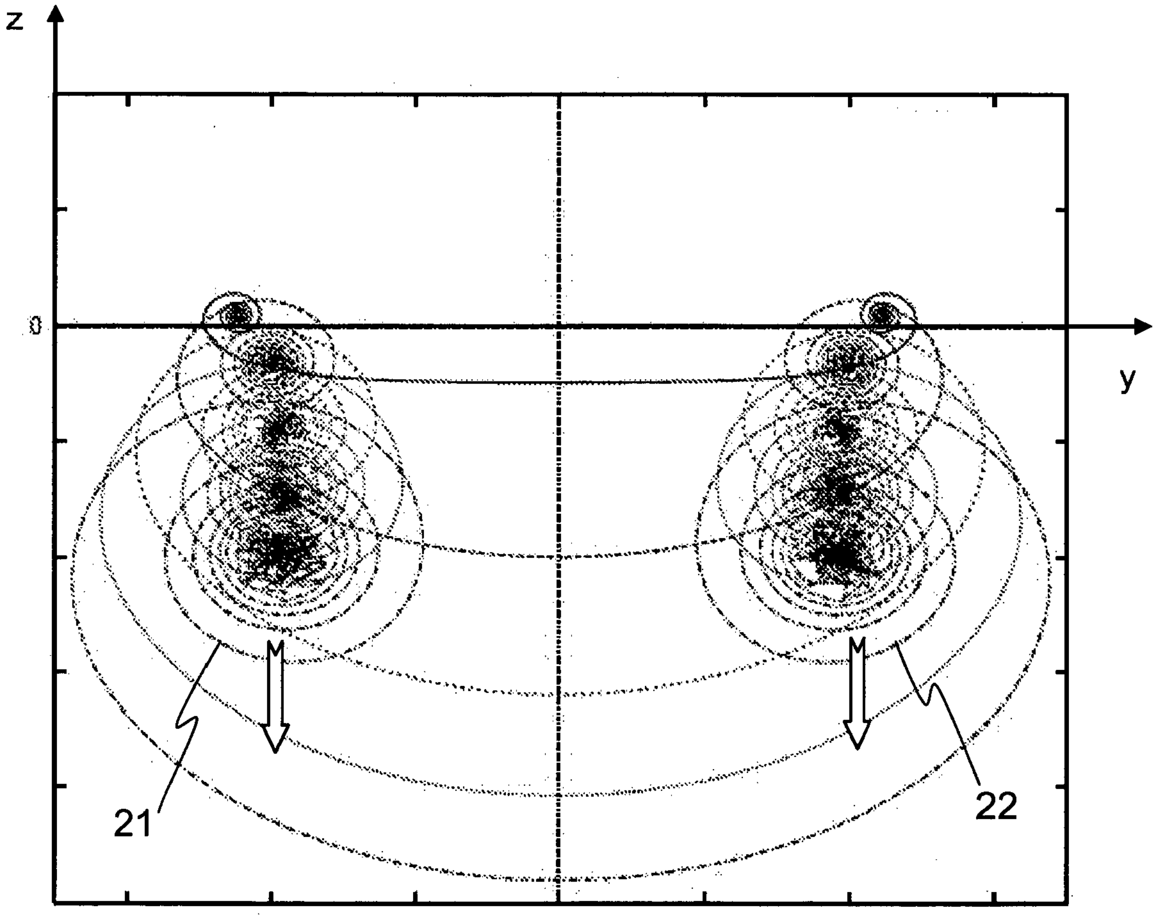


FIG. 4

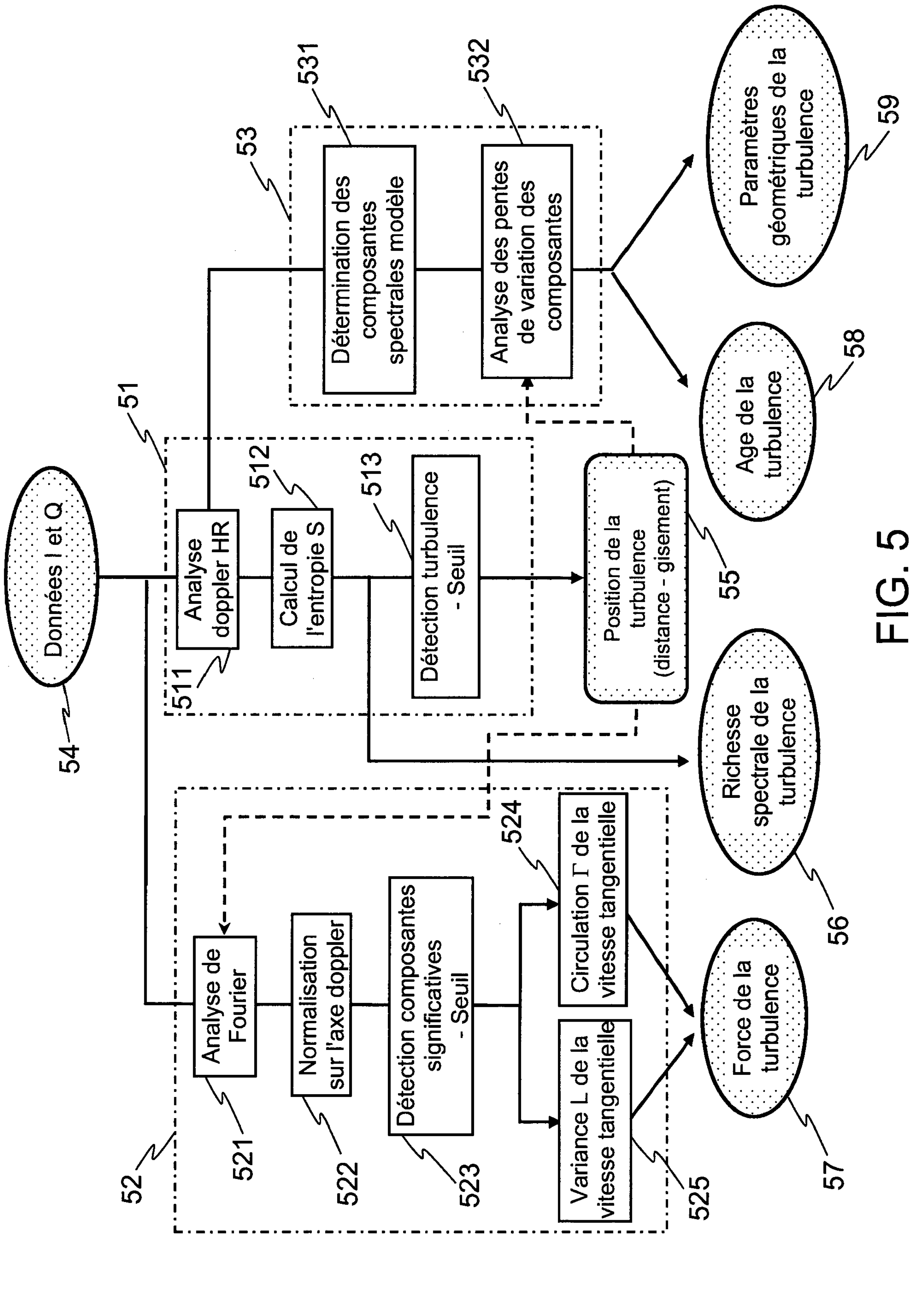

Données I et Q
54
51
511
Analyse doppler HR
512
Calcul de l'entropie S
513
Détection turbulence - Seuil
53
531
Détermination des composantes spectrales modèle
532
Analyse des pentes de variation des composantes
55
Position de la turbulence (distance - gisement)
52
521
Analyse de Fourier
522
Normalisation sur l'axe doppler
523
Détection composantes significatives - Seuil
524
Circulation Γ de la vitesse tangentielle
525
Variance L de la vitesse tangentielle
56
Richesse spectrale de la turbulence
57
Force de la turbulence
58
Age de la turbulence
59
Paramètres géométriques de la turbulence


FIG. 5

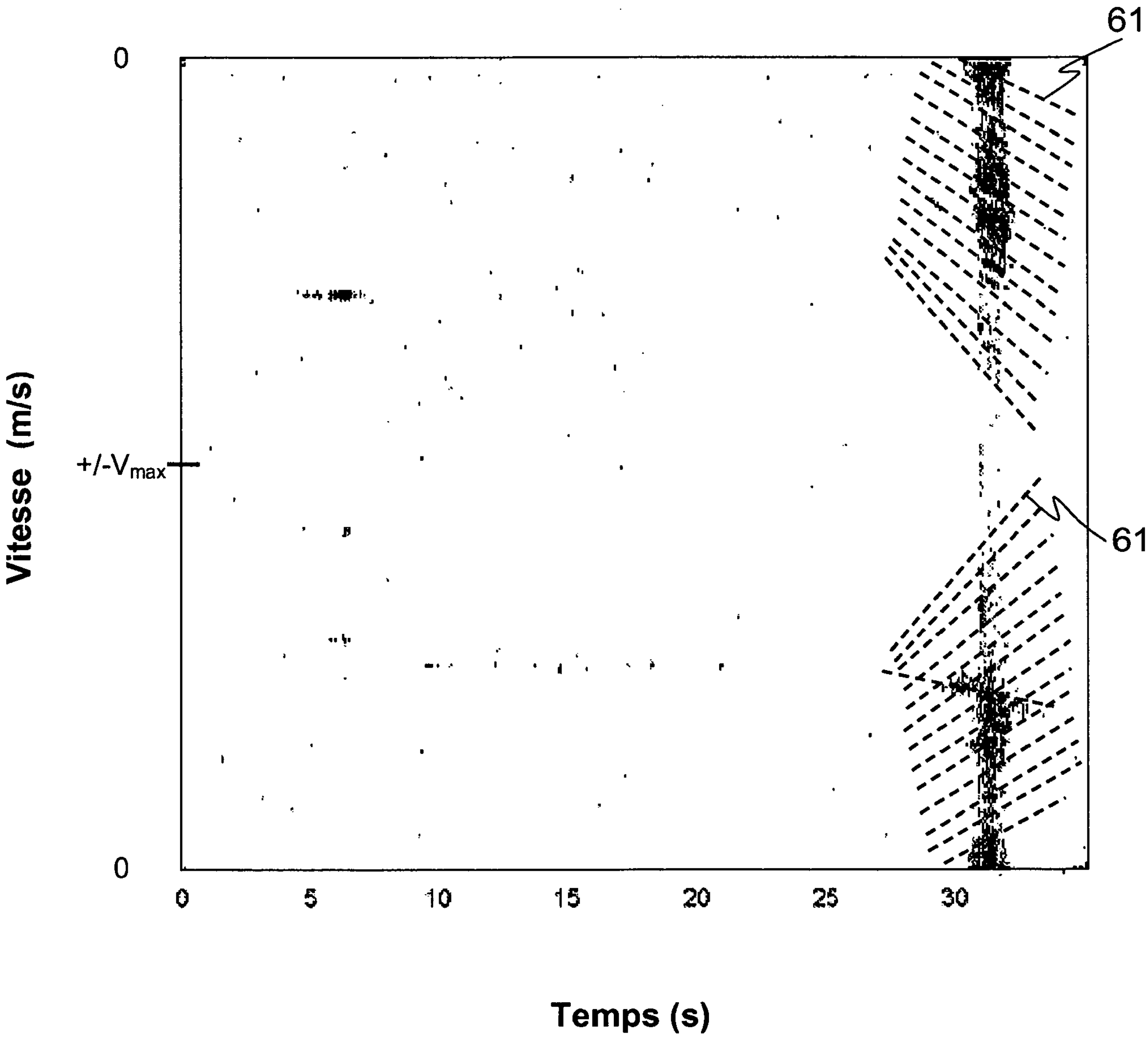


FIG. 6

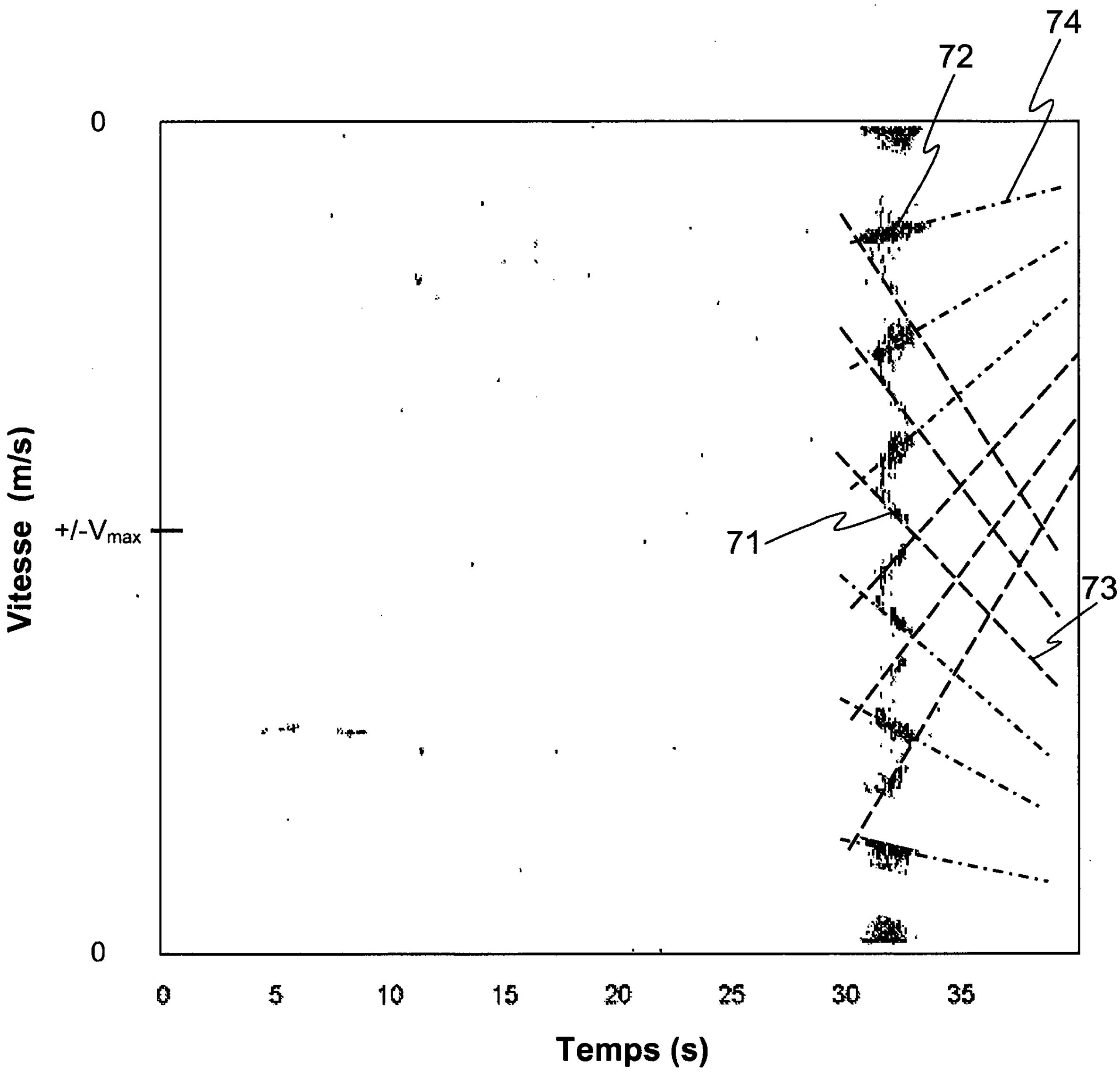


FIG. 7

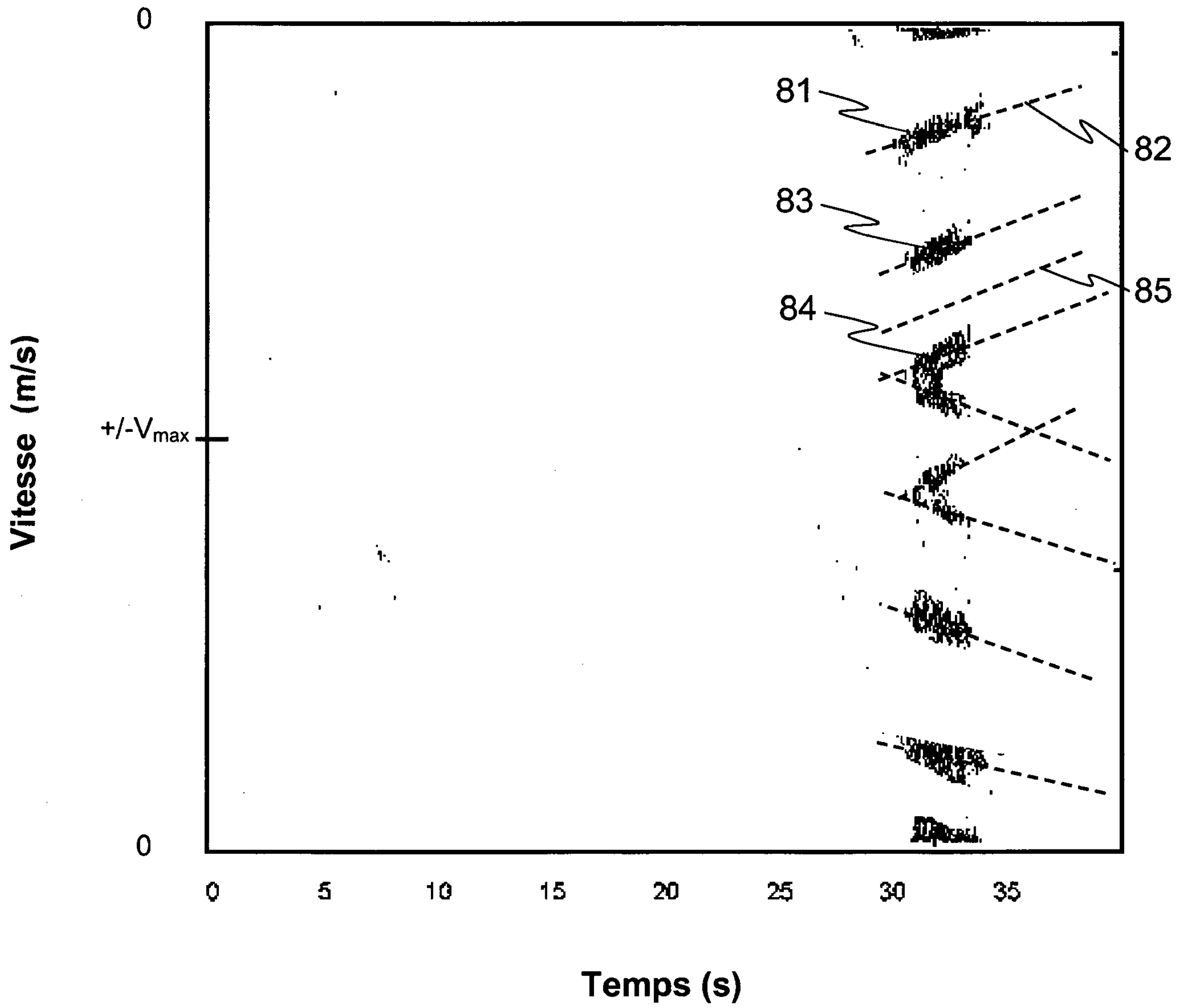


FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5208600 A
- US 6480142 B
- FR 9506983
- FR 0509095